# FASCICULE DE BREVET EUROPEEN

(11) **EP 4 615 754 B1**
(45) Date de publication et mention de la délivrance du brevet: **02.12.2026**
(21) Numéro de dépôt: 23745187.7
(22) Date de dépôt: 24.07.2023
(51) Int. Cl.: B64D 37/20, F16K 31/44, F16K 35/02

(54) **DRAIN MUNI D'UN DISPOSITIF DE DÉBRAYAGE**
ABLAUF MIT EINER AUSRÜCKVORRICHTUNG
DRAIN PROVIDED WITH A DISENGAGEMENT DEVICE

(30) Priorité: 09.11.2022 FR 2211664
(43) Date de publication de la demande: 17.09.2025
(73) Titulaire: Safran Aerosystems, 78370 Plaisir (FR)
(72) Inventeur: BONNET, Olivier, 77550 Moissy-Cramayel (FR); COURBON, Jacques, 77550 Moissy-Cramayel (FR)
(74) Mandataire: Marconnet, Sébastien
(86) Numéro de dépôt international: PCT/EP2023/070470
(87) Numéro de publication internationale: WO 2024/099603

(56) Documents cités:
- EP-A1- 3 193 061
- EP-A1- 3 754 238
- FR-A1- 2 987 614
- US-A- 4 351 355

## Description

La présente invention porte sur un drain muni d'un dispositif de débrayage, actionnable en cas de surcouple susceptible d'intervenir lors d'une opération de drainage ou lors d'une opération de changement de joint du drain. L'invention trouve particulièrement une application avantageuse dans le domaine des réservoirs d'aéronefs, tels que les réservoirs d'avions ou d'hélicoptères.

La fonction d'un tel drain est notamment de permettre une vidange des condensats et/ou des polluants de densité supérieure au kérosène se trouvant en partie basse dans un réservoir.

De façon connue en soi, le drain comporte un corps ayant au moins une ouverture d'admission de fluide et une ouverture de refoulement de fluide, en particulier permettant un drainage du réservoir. A cet effet, le drain comporte une soupape montée mobile en translation et en rotation par rapport au corps.

Le drain est notamment apte à prendre une position fermée, dans laquelle une tête de soupape obture l'ouverture de refoulement de fluide, et une position ouverte, dans laquelle la tête de soupape est repoussée par rapport à l'ouverture de refoulement de fluide pour autoriser un passage de fluide à travers le drain, notamment pour permettre le drainage du réservoir.

Un passage de la position fermée vers la position ouverte pour réaliser le drainage du réservoir est effectué manuellement par, dans un premier temps, poussée axiale de la soupape, de façon à repousser en translation la tête de soupape de l'ouverture de refoulement, apte à permettre le drainage, puis, dans un deuxième temps, par une rotation d'une fraction de tour de la soupape.

Lors de la poussée axiale, un ergot de la soupape sort d'un logement réalisé dans le corps puis, suite à la rotation, l'ergot vient en appui contre une face d'extrémité du corps pour maintenir la soupape dans une position ouverte stable.

La fermeture du drain est réalisée par une rotation inverse, un ressort de rappel assurant le déplacement de la soupape vers la position fermée.

Il existe également une position de maintenance permettant de remplacer un joint d'étanchéité disposé autour de la tête de soupape.

Un drain selon l'état de la technique est fiable si un opérateur respecte les instructions d'utilisation. Toutefois, dans le cas de non-respect d'une consigne de manœuvre lors d'une phase d'ouverture, l'opérateur peut appliquer un couple non maitrisé sur la soupape sans l'avoir préalablement déplacée en translation. L'application d'un tel couple alors que l'ergot de la soupape se trouve encore dans le logement engendre une casse de celui-ci.

Etant donné qu'une opération de drainage est réalisée sur un réservoir plein, une casse du mécanisme interne du drain oblige à effectuer un arrêt en maintenance. Au cours d'un tel arrêt, il est alors procédé à une vidange complète des réservoirs concernés, à une ouverture d'au moins un "trou d'homme" permettant un passage d'un opérateur pour une inspection du réservoir, à une intervention de plusieurs opérateurs de maintenance avec des équipements spéciaux afin de démonter et d'extraire le drain défaillant pour un remplacement par un neuf. Il est ensuite nécessaire de refermer le "trou d'homme" et d'effectuer des essais d'étanchéité du réservoir et du drain.

Les opérations précédemment décrites sont longues et imposent une immobilisation de l'aéronef pendant toute la durée de leur réalisation.

Le document US4351355 décrit une soupape de vidange destinée à être utilisée dans un réservoir de carburant et comportant un orifice de vidange et un élément de soupape mobile axialement. L'élément de soupape est apte à prendre une première position pour fermer l'orifice de vidange, une deuxième position pour ouvrir l'orifice de vidange pour permettre la vidange du liquide du réservoir de carburant, et une troisième position dans laquelle l'élément de soupape est abaissé pour exposer un joint pour inspection ou remplacement.

Le document EP3754238 décrit un outil pour actionner une vanne comprenant un arbre définissant un axe longitudinal et configuré pour transférer une force à une soupape. Un corps présente une paroi entourant une partie de l'arbre. La paroi définit une piste ayant une section de piste sensiblement parallèle à l'axe longitudinal. L'arbre est relié de manière coulissante au corps et lorsqu'une force est appliquée à l'arbre dans une direction alignée avec l'axe longitudinal, l'arbre se déplace par rapport au corps et un élément de couplage se déplace à travers la section de piste qui empêche la rotation de l'arbre autour de l'axe longitudinal.

Le document EP3193061 décrit une soupape d'échangeur de chaleur comprenant un agencement de boîtier, un élément de soupape disposé à l'intérieur dudit agencement de boîtier, un boîtier de presse-étoupe relié audit agencement de boîtier, et une goupille agissant sur l'élément de soupape.

Le document FR2987614 décrit une vanne comportant un piston pouvant être déplacé le long de son axe longitudinal. Le piston est mobile entre une position dans laquelle le piston scelle une ouverture, et une autre position dans laquelle le piston libère un passage de liquide entre l'ouverture et une chambre de mise en communication fluidique pour permettre l'écoulement d'un liquide, notamment du carburant, à travers la chambre vers l'orifice de sortie.

L'invention vise à remédier efficacement aux inconvénients précités en proposant un drain tel que défini par les revendications.

Ainsi, le ressort de pression est apte à se comprimer pour autoriser une rotation du guide mobile par rapport au guide fixe, lorsqu'un surcouple est appliqué sur la soupape alors que l'ergot se trouve encore à l'intérieur du logement de réception.

L'invention permet ainsi, grâce au dispositif de débrayage s'actionnant avant l'application par l'opérateur d'un couple critique susceptible d'endommager le drain, d'éviter une mise sous tension de l'ergot de la soupape et donc d'éviter la casse du mécanisme interne du drain due à une mauvaise manœuvre de la part de l'opérateur.

Selon une réalisation de l'invention, un ressort de rappel est disposé entre un épaulement de la soupape et le guide mobile.

Par ailleurs, le guide fixe peut comporter une portion annulaire, le creux étant réalisé dans une extrémité de la portion annulaire du guide fixe.

De plus, le guide fixe peut comporter et au moins une portion saillante, destinée à coopérer avec une rainure de forme correspondante réalisée dans le corps.

Selon une forme de réalisation de l'invention, une face externe de la portion annulaire du guide fixe et une face interne du corps comportent respectivement une première gorge et une deuxième gorge en vis-à-vis l'une de l'autre.

Dans une telle configuration, un jonc est apte à coopérer avec la première gorge et la deuxième gorge.

Par ailleurs, le guide mobile comporte une portion cylindrique insérée à l'intérieur d'un espace interne creux du guide fixe et comprenant le logement de réception de l'ergot.

Selon cette forme réalisation de l'invention, le guide mobile comporte un épaulement annulaire s'étendant radialement depuis une face externe de la portion cylindrique.

Dans une telle configuration, la saillie est réalisée sur une face supérieure de l'épaulement annulaire du guide mobile.

De plus, la portion cylindrique du guide mobile comprend au moins une ouverture traversante décalée angulairement par rapport au logement de réception de l'ergot, notamment de sorte à permettre le passage de la soupape dans une position de maintenance.

L'invention a également pour objet un réservoir d'aéronef comportant un drain tel que précédemment défini et un aéronef comportant un tel réservoir d'aéronef.

L'invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de l'invention et l'exposé de sa réalisation et, le cas échéant, contribuer à sa définition, sur lesquelles :
[Fig. 1] La figure 1 est une vue en perspective d'un drain selon l'invention ;
[Fig. 2] La figure 2 est une vue en perspective éclatée d'un drain selon l'invention dépourvu des ressorts de rappel et de pression ;
[Fig. 3a] La figure 3a est une vue en coupe longitudinale du drain selon l'invention dans une position fermée ;
[Fig. 3b] La figure 3b est une vue en coupe longitudinale du drain selon l'invention dans une position ouverte ;
[Fig. 3c] La figure 3c est une vue en coupe longitudinale du drain selon l'invention dans une position de remplacement d'un joint d'étanchéité ;
[Fig. 4] La figure 4 est une vue en perspective d'un drain selon l'invention associé à un dispositif de montage ;
[Fig. 5] La figure 5 est une vue en coupe d'un drain selon l'invention monté sur une paroi de réservoir ;
[Fig. 6] La figure 6 est une vue en perspective d'un dispositif de débrayage intégré au drain selon l'invention ;
[Fig. 7] La figure 7 est une vue en perspective d'un guide fixe constitutif du dispositif de débrayage de la figure 6 ; et
[Fig. 8] La figure 8 est une vue en perspective d'un guide mobile constitutif du dispositif de débrayage de la figure 6.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et/ou matérielles identiques.

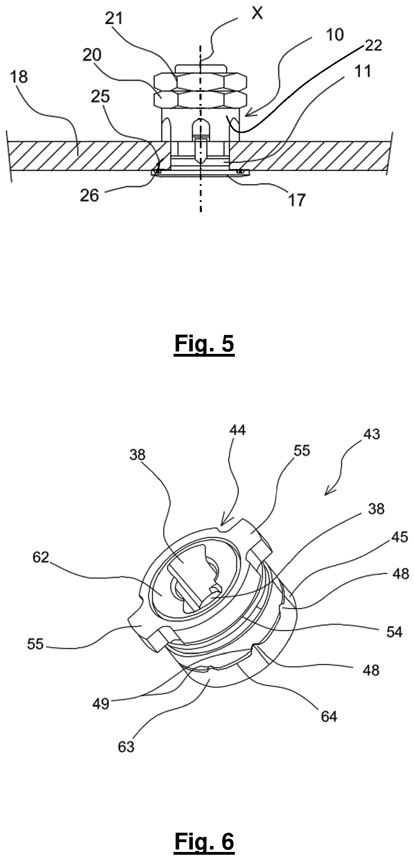

Les termes relatifs du type "supérieur" ou "inférieur" sont indiqués par référence à un drain installé sur un réservoir, ce qui correspond notamment à l'orientation du drain montré sur la figure 5.

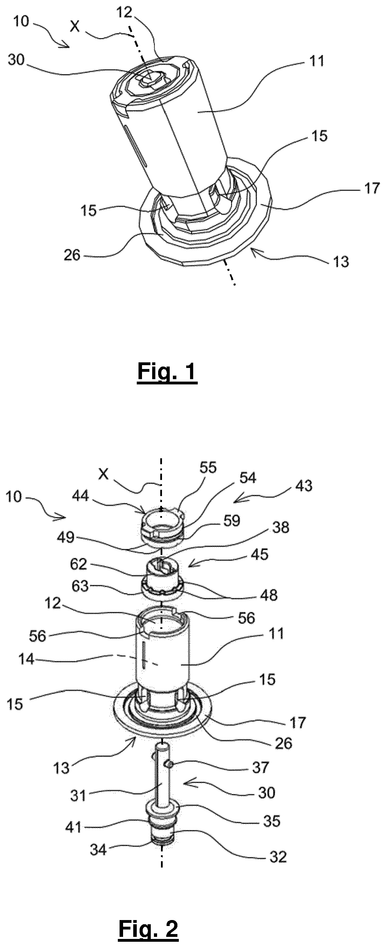

La figure 1 et la figure 2 sont respectivement est une vue en perspective et une vue en perspective éclatée d'un drain 10 selon l'invention.

Le drain 10 comporte un corps 11 ayant une forme annulaire s'étendant sur un axe d'extension X. Le corps 11 comporte au moins une ouverture d'admission de fluide 12, 15 et au moins une ouverture de refoulement de fluide 13.

Plus spécifiquement, selon l'exemple de réalisation présenté, le corps 11 comporte au moins une ouverture centrale 12 et au moins une ouverture latérale 15, avantageusement plusieurs ouvertures latérales 15, en tant qu'ouvertures d'admission de fluide 12, 15 apte à permettre une admission de fluide.

De plus, selon l'exemple de réalisation présenté, le corps 11 comporte une ouverture de drainage 13, en tant qu'ouverture de refoulement de fluide 13.

L'ouverture d'admission de fluide 12, 15 et l'ouverture de refoulement de fluide 13, à savoir l'ouverture centrale 12, l'ouverture latérale 15 et l'ouverture de drainage 13 sont en communication l'une avec l'autre par l'intermédiaire d'un canal traversant 14. Une collerette d'extrémité 17 est destinée à venir en appui contre une face extérieure d'une paroi de réservoir 18, notamment un réservoir d'aéronef.

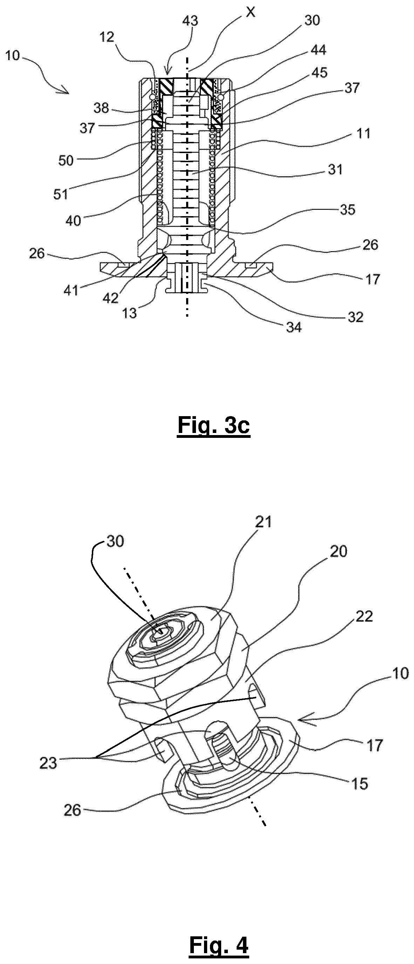

En se référant aux figures 4 et 5 qui sont respectivement une vue en perspective du drain 10 associé à un dispositif de montage et une vue en coupe drain 10 monté sur une paroi de réservoir 18, le dispositif de montage permet d'assurer un montage du drain 10 sur la paroi de réservoir 18.

Plus spécifiquement, le dispositif de montage peut comprendre un écrou 20, un contre-écrou 21 et une entretoise 22.

L'entretoise 22 est agencée autour du corps 11. Plus particulièrement, l'entretoise 22 présente une forme annulaire s'étendant selon l'axe d'extension X. De plus, l'entretoise 22 peut être pourvue d'au moins une lumière 23, préférentiellement plusieurs lumières 23. En particulier, les lumières 23 sont destinées à venir en regard des ouvertures latérales 15 pour définir un passage de fluide.

Le montage du drain 10 est assuré en serrant le dispositif de montage grâce l'écrou 20 et le contre-écrou 21, de telle façon que la paroi de réservoir 18 est prise en sandwich entre l'entretoise 22 et une collerette 17 du corps 11 du drain 10.

Afin d'assurer l'étanchéité du montage du drain 10, un joint 25 est susceptible d'être disposé à l'intérieur d'une gorge 26 réalisée dans une face de la collerette 17 du drain 10 destinée à être plaquée contre une face extérieure de la paroi de réservoir 18.

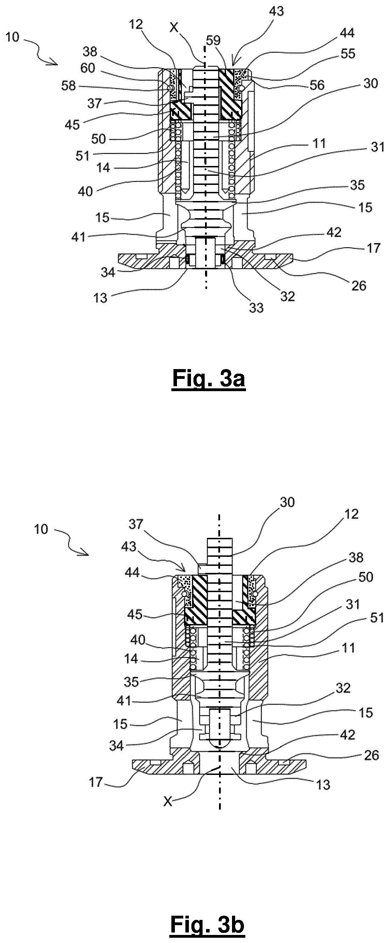

En se reportant à la figure 2 et à la figure 3a qui est une vue en coupe longitudinale du drain 10 dans une position fermée, une soupape 30 est montée mobile en translation et en rotation par rapport au corps 11.

A cet effet, la soupape 30 s'étend selon un axe confondu avec l'axe d'extension X du corps 11.

Par ailleurs, la soupape 30 comporte une tige 31 et une tête de soupape 32 située à une extrémité de la tige 31 disposée du côté de l'ouverture de refoulement de fluide 13 du drain 10 permettant le drainage du réservoir. De plus, la soupape 30 peut comporter un joint d'étanchéité 33, comme cela est visible sur la figure 3a. Le joint d'étanchéité 33 est disposé à l'intérieur d'une gorge 34, préférentiellement réalisée dans une périphérie externe de la tête de soupape 32.

Le drain 10 est apte à prendre:
- une position fermée, dans laquelle la tête de soupape 32 obture l'ouverture de refoulement de fluide 13 du drain 10, en l'occurrence l'ouverture de drainage 13 selon l'exemple de réalisation présenté, permettant le drainage du réservoir, et
- une position ouverte, dans laquelle la tête de soupape 32 est repoussée par rapport à l'ouverture de refoulement de fluide 13 du drain 10, en l'occurrence l'ouverture de drainage 13 selon l'exemple de réalisation présenté, permettant le drainage du réservoir.

De plus, le drain 10 est également apte à prendre une position de maintenance, dans laquelle un remplacement du joint d'étanchéité 33 est possible, tel que cela est expliqué ci-après.

Par ailleurs, la soupape 30 comporte au moins un ergot 37. L'ergot 37 est susceptible de s'étendre en saillie radiale par rapport à une face externe de la tige 31 de la soupape 30. Selon l'exemple de réalisation présenté, la soupape 30 comporte deux ergots 37 diamétralement opposés l'un par rapport à l'autre.

L'ergot 37 est destiné à coopérer avec un logement de réception 38 de forme correspondante réalisé dans un guide fixe 44 de la soupape 30, tel que décrit plus ci-après.

Comme cela est visible notamment sur la figure 3a, la soupape 30 peut comporter au moins un ressort de rappel 40. Préférentiellement, le ressort de rappel 40 est apte à être disposé entre un épaulement 35 de la tige 31 et le corps 11 du drain 10. Alternativement, le ressort de rappel 40 est apte à être disposé entre l'épaulement 35 de la tige 31 et un élément fixe par rapport au corps 11 du drain 10, tel que par exemple le guide fixe 44 de la soupape 30.

La soupape 30 peut également comporter un épaulement d'étanchéité 41. L'épaulement d'étanchéité 41 est destiné venir en contact avec une face interne 42 du corps 11 du drain 10. Selon une alternative de réalisation, l'épaulement d'étanchéité 41 peut présenter une face tronconique. Notamment, la face interne 42 du corps 11 du drain 10 peut être tronconique, de forme correspondante à la face de forme tronconique de l'épaulement d'étanchéité 41. La mise en contact de la face tronconique de l'épaulement d'étanchéité 41 avec la face interne 42 du corps 11 du drain 10 tronconique permet d'assurer une étanchéité du drain 10 lors du remplacement du joint d'étanchéité 33.

On se reporte dorénavant notamment aux figures 3b et 3c qui sont des vues en coupe longitudinale du drain 10 respectivement dans une position ouverte et dans une position de remplacement du joint d'étanchéité 33 et à la figure 6 qui est une vue en perspective d'un dispositif de débrayage 43 intégré au drain 10.

Le dispositif de débrayage 43 est actionnable en cas de surcouple opéré sur le drain 10 lors de l'opération de drainage. A cet effet, le dispositif de débrayage 43 comporte le guide fixe 44, apte à être monté de façon à être fixe par rapport au corps 11, et un guide mobile 45, apte â être monté mobile, notamment mobile en rotation et en translation, par rapport au guide fixe 44.

Le guide mobile 45 comporte au moins un logement de réception 38 apte à recevoir l'ergot 37. Dans l'exemple représenté, le guide mobile 45 comporte deux logements de réception 38 diamétralement opposés l'un par rapport à l'autre pour recevoir deux ergots 37 diamétralement opposés l'un par rapport à l'autre sur la tige 31 de la soupape 30. Bien entendu, le nombre de logements de réception 38 est adapté en fonction du nombre d'ergots 37 portés par la tige 31 de la soupape 30.

Selon un premier mode de réalisation, le guide fixe 44 comporte au moins une saillie 48. Le guide mobile 45 comporte au moins un creux 49 ayant une forme complémentaire de la saillie 48.

Selon un deuxième mode de réalisation, le guide mobile 45 comporte au moins une saillie 48. Le guide fixe 44 comporte au moins un creux 49 ayant une forme complémentaire de la saillie 48.

Selon un autre mode de réalisation alternatif, le guide fixe 44 et le guide mobile 45 comportent respectivement au moins une saillie 48 et au moins un creux 49 ayant une forme complémentaire de la saillie 48.

Comme cela est notamment présenté sur les figures 3a à 3c, un ressort de pression 50 sollicite le guide mobile 45 contre le guide fixe 44 de sorte à ce que la saillie 48 coopère avec le creux 49 de forme correspondante.

Tel que présenté, le ressort de pression 50 est en appui, d'une part, contre une surface d'appui 51, notamment un épaulement, du corps 11, en particulier réalisée dans une face interne du corps 11, et, d'autre part, contre une face d'extrémité du guide mobile 45.

La surface d'appui 51 peut être définie par une différence de diamètre interne du corps 11.

Préférentiellement et tel que présenté sur l'exemple de réalisation, le dispositif de débrayage 43 comporte plusieurs saillies 48 et plusieurs creux 49.

Alternativement, le dispositif de débrayage 43 comporte une unique saillie 48 et plusieurs creux 49.

Avantageusement, le dispositif de débrayage 43 comporte plusieurs creux 49 régulièrement répartis angulairement.

Ainsi, lorsqu'un couple inférieur à un couple seuil est exercé sur la soupape 30 alors que l'ergot 37 est disposé à l'intérieur du logement de réception 38, une force exercée par le ressort de pression 50 contraint la (les) saillie(s) 48 dans le (les) creux 49. En conséquence, le guide mobile 45 reste fixe par rapport au guide fixe 44.

Lorsqu'un couple supérieur au couple seuil, également dénommé surcouple dans la présente description, est exercé sur la soupape 30 alors que l'ergot 37 est disposé à l'intérieur du logement de réception 38, le ressort de pression 50 est apte à se comprimer et ne contraint plus la (les) saillie(s) 48 dans le (les) creux 49 de sorte à pouvoir autoriser une rotation du guide mobile 45 par rapport au guide fixe 44.

Préférentiellement, la rotation du guide mobile 45 par rapport au guide fixe 44 d'au moins une fraction de tour est telle que la (les) saillie(s) 48 vien(nen)t coopérer avec un (des) creux 49 adjacents à celui (ceux) dans lesquels la (les) saillie(s) 48 étai(en)t insérée(s) initialement.

La valeur du couple seuil peut être adaptée en fonction du tarage du ressort de pression 50.

Dans le cas où le dispositif de débrayage 43 comporte une seule saillie 48 et un seul creux 49, on réalise une rotation de 360 degrés lors du débrayage du guide mobile 45 par rapport au guide fixe 44.

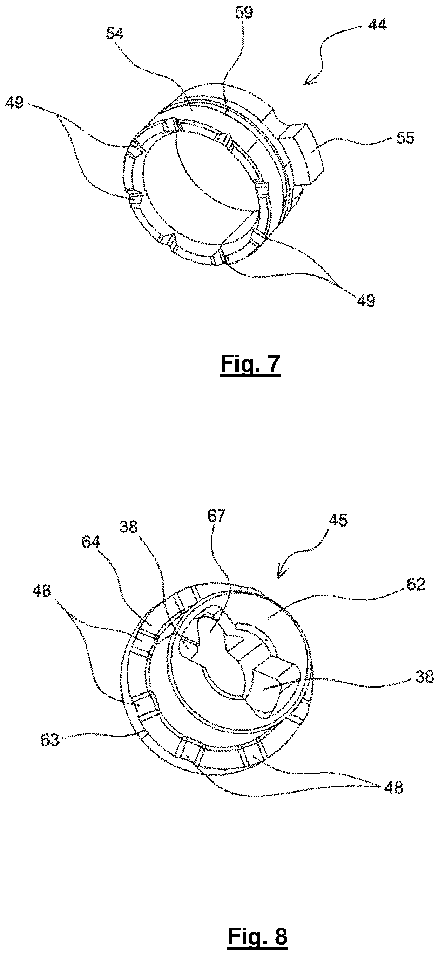

Plus précisément, comme on peut le voir en relation avec les figures 2 et 6 et sur la figure 7 qui est une vue en perspective du guide fixe 44 du dispositif de débrayage 43 de la figure 6, le guide fixe 44 comporte une portion annulaire 54, avantageusement s'étendant selon l'axe d'extension X de sorte à définir une portion en forme de manchon tubulaire, et au moins une portion saillante 55, préférentiellement s'étendant radialement en saillie de la portion annulaire 54 par rapport à l'axe d'extension X.

La portion saillante 55 du guide fixe 44 est destinée à coopérer avec une rainure 56 de forme correspondante réalisée dans le corps 11 du drain 10. Une telle configuration permet d'assurer un maintien en rotation du guide fixe 44 par rapport au corps 11 du drain 10.

En l'occurrence, le guide fixe 44 comporte deux portions saillantes 55 diamétralement opposées l'une par rapport à l'autre. En variante, le guide fixe 44 pourra comporter un nombre de portions saillantes 55 supérieur à deux ou une seule portion saillante 55.

Selon l'exemple de réalisation illustré sur la figure 3a, un maintien en position du guide fixe 44 par rapport au corps 11 du drain 10 est assuré par un jonc 58 coopérant avec au moins une première gorge 59 et une deuxième gorge 60, en vis-à-vis l'une de l'autre, réalisées respectivement dans une face externe de la portion annulaire 54 du guide fixe 44 et dans une face interne du corps 11.

Selon l'exemple de réalisation illustré sur les figures, le guide fixe 44 comporte des creux 49 réalisés dans une extrémité de la portion annulaire 54.

De préférence, les creux 49 sont espacés angulairement de façon régulière suivant une circonférence de la portion annulaire 54. En variante, l'espacement angulaire entre les creux 49 n'est pas régulier.

Comme on peut le voir en relation avec les figures 2 et 6 et sur la figure 8 qui est une vue en perspective du guide mobile 45 du dispositif de débrayage 43 de la figure 6, le guide mobile 45 comporte une portion cylindrique 62 s'étendant selon l'axe d'extension X. Plus spécifiquement, la portion cylindrique 62 est apte à s'insérer à l'intérieur d'un espace interne creux du guide fixe 44 délimité par la portion annulaire 54.

Préférentiellement, les logements de réception 38 de l'ergot 37 sont réalisés dans la portion cylindrique 62 du guide mobile 45.

De plus, le guide mobile 45 peut comporter un épaulement annulaire 63 s'étendant radialement depuis une face externe de la portion cylindrique 62.

Selon l'exemple de réalisation illustré sur les figures, le guide mobile 45 comporte des saillies 48 réalisées sur une face supérieure 64 de l'épaulement annulaire 63, en vis-à-vis de l'extrémité de la portion annulaire 54 comportant les creux 49.

La face supérieure 64 s'étend dans un plan radial par rapport à l'axe d'extension X. De préférence, Les saillies 48 sont espacées angulairement de façon régulière suivant une circonférence de la portion cylindrique 62. En variante, l'espacement angulaire entre les saillies 48 n'est pas régulier.

Les saillies 48 et les creux 49 présentent des formes complémentaires qui pourront être arrondies, notamment en forme de demi-cercle, triangulaire, rectangulaire, carrée, ou de toute autre forme adaptée à l'application.

Comme cela est particulièrement visible sur la figure 8, au moins une ouverture traversante 67 est réalisée dans la portion cylindrique 62. Plus particulièrement, l'ouverture traversante 67 est décalée angulairement par rapport au(x) logement(s) de réception 38 du (des) ergot(s) 37. L'ouverture traversante 67 est réalisée dans une face décalée axialement, de quelques millimètres, par rapport au fond du logement de réception 38 de l'ergot 37.

L'ouverture traversante 67 autorise le passage de l'ergot 37 correspondant pour permettre au drain 10 de passer dans la position de maintenance.

Les différents composants du drain 10 peuvent être réalisés dans un matériau plastique. En variante, les composants du drain 10 peuvent être réalisés dans un matériau métallique, un matériau composite, ou tout autre matériau adapté à l'application.

Dans le cas d'un fonctionnement normal, un passage de la position fermée, illustrée à la figure 3a, à la position ouverte, illustrée à la figure 3b, est réalisée manuellement par une poussée axiale selon l'axe d'extension X suivie d'une rotation de la soupape 30.

Plus précisément, l'opérateur effectue:
- une poussée axiale selon l'axe d'extension X de la soupape 30 pour repousser la tête de soupape 32 par rapport à l'ouverture de refoulement de fluide 13 et pour désengager l'ergot 37 du logement de réception 38,
- puis une rotation d'une fraction de tour, notamment 90 degrés, de la soupape 30 par application d'un couple sur la soupape 30 pour que l'ergot 37 soit décalé angulairement par rapport au logement de réception 38 et vienne en appui contre la face d'extrémité du guide mobile 45.

Le ressort de rappel 40 est alors dans un état comprimé. La tête de soupape 32 est éloignée de l'ouverture refoulement de fluide 13. Le drain 10 se situe alors dans une position ouverte stable permettant un drainage du réservoir, tel que présenté sur la figure 3b.

Pour refaire passer le drain 10 en position fermée, l'opérateur effectue une rotation inverse d'une fraction de tour jusqu'à ce que l'ergot 37 vienne en regard du logement de réception 38. Le ressort de rappel 40 peut alors se décomprimer pour déplacer l'ergot 37 contre le fond du logement de réception 38. La tête de soupape 32 vient alors obturer l'ouverture de refoulement de fluide 13. Le drain 10 se situe alors dans la position fermée stable, tel que présenté sur la figure 3a.

Lorsqu'un surcouple est appliqué sur la soupape 30 alors que l'ergot 37 se trouve encore à l'intérieur du logement de réception 38 suite à une mauvaise manœuvre de la part de l'opérateur, le guide mobile 45 peut reculer légèrement par rapport au guide fixe 44 en comprimant le ressort de pression 50 et tourner d'une fraction de tour par rapport au guide fixe 44. Les saillies 48 viennent alors coopérer avec des creux 49 angulairement adjacents aux creux 49 dans lesquelles les saillies 48 étaient insérées initialement.

Une telle manipulation permet ainsi d'absorber le surcouple sans risque de rupture du mécanisme interne du drain 10. Lors du déplacement du guide mobile 45 par rapport au guide fixe 44, le drain 10 reste en position fermée.

Pour faire passer le drain 10 de la position fermée, illustrée à la figure 3a, à une position de maintenance, illustrée à la figure 3c, l'opérateur pousse la soupape 30 de quelques millimètres jusqu'à ce que l'ergot 37 se trouve au même niveau que la face du guide mobile 45 dans lequel est réalisée l'ouverture traversante 67 de forme correspondante.

L'opérateur fait ensuite tourner la soupape 30, de sorte que l'ergot 37 vienne en regard de l'ouverture traversante 67 correspondante. Le ressort de rappel 40 se décomprime alors jusqu'à ce que la face tronconique de l'épaulement d'étanchéité 41 vienne en appui contre la face tronconique 42 de forme correspondante réalisée dans le corps 11.

Dans une telle configuration, la tête de soupape 32 s'étend à l'extérieur du corps 11. L'opérateur peut alors procéder au remplacement du joint d'étanchéité 33 situé autour de la tête de soupape 32 qui lui est alors accessible.

Par une opération inverse consistant à pousser axialement la soupape 30 et à la faire tourner de façon à faire coopérer l'ergot 37 avec le logement de réception 38, l'opérateur fait repasser le drain 10 en position fermée.

L'invention a également pour objet un réservoir d'aéronef comportant un drain 10 selon l'invention et un avion comportant un tel réservoir.

Bien entendu, les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

En outre, l'invention n'est pas limitée aux modes de réalisation décrits précédemment et fournis uniquement à titre d'exemple. Elle englobe diverses modifications, formes alternatives et autres variantes que peut envisager l'homme du métier dans le cadre de la présente invention tel que défini par les revendications et notamment toutes combinaisons des différents modes de fonctionnement décrits précédemment, pouvant être pris séparément ou en association.

## Revendications

1. Drain (10) comportant:
- un corps (11) ayant au moins une ouverture d'admission de fluide (12, 15) et au moins une ouverture de refoulement de fluide (13), et
- une soupape (30) montée mobile en translation et en rotation par rapport au corps (11), la soupape (30) comprenant au moins un ergot (37),
- un dispositif de débrayage (43) comprenant:
- un guide fixe (44), apte à être monté de façon à être fixe par rapport au corps (11),
**caractérisé en ce que** le dispositif de débrayage (43) comporte en outre:
- un guide mobile (45), comportant au moins un logement de réception (38) de l'ergot (37),
- le guide fixe (44) comportant au moins une saillie (48) et le guide mobile (45) comportant au moins un creux (49), ou alternativement le guide mobile (45) comportant au moins une saillie (48) et le guide fixe (44) comportant au moins un creux (49), le creux (48) étant de forme complémentaire à la saillie (48), et
- un ressort de pression (50), apte à solliciter le guide mobile (45) contre le guide fixe (44) de sorte que la saillie (48) coopère avec le creux (49),
de sorte que le ressort de pression (50) est apte à se comprimer pour autoriser une rotation du guide mobile (45) par rapport au guide fixe (44), lorsqu'un surcouple est appliqué sur la soupape (30) alors que l'ergot (37) se trouve encore à l'intérieur du logement de réception (38).

2. Drain (10) selon la revendication 1, **caractérisé en ce qu'**un ressort de rappel (40) est disposé entre un épaulement (35) de la soupape (30) et le guide mobile (45).

3. Drain (10) selon l'une quelconque des revendications précédentes, **caractérisé en ce que** le guide fixe (44) comporte une portion annulaire (54) et **en ce que** le creux (49) est réalisé dans une extrémité de la portion annulaire (54) du guide fixe (44).

4. Drain (10) selon l'une quelconque des revendications précédentes, **caractérisé en ce que** le guide fixe (44) comporte au moins une portion saillante (55) destinée à coopérer avec une rainure (56) de forme correspondante réalisée dans le corps (11).

5. Drain (10) selon la revendication 3 ou 4, **caractérisé en ce qu'**une face externe de la portion annulaire (54) du guide fixe (44) et une face interne du corps (11) comportent respectivement une première gorge (59) et une deuxième gorge (60) en vis-à-vis l'une de l'autre.

6. Drain (10) selon la revendication 5, **caractérisé en ce qu'**un jonc (58) coopère avec la première gorge (59) et la deuxième gorge (60).

7. Drain (10) selon l'une quelconque des revendications précédentes, **caractérisé en ce que** le guide mobile (45) comporte une portion cylindrique (62) insérée à l'intérieur d'un espace interne creux du guide fixe (44) et comprenant le logement de réception (38) de l'ergot (37).

8. Drain (10) selon la revendication 6, **caractérisé en ce que** le guide mobile (45) comporte un épaulement annulaire (63) s'étendant radialement depuis une face externe de la portion cylindrique (62).

9. Drain (10) selon la revendication 7, **caractérisé en ce que** la saillie (48) est réalisée sur une face supérieure (64) de l'épaulement annulaire (63) du guide mobile (45).

10. Drain (10) selon l'une quelconque des revendications 7 à 9, **caractérisé en ce que** la portion cylindrique (62) du guide mobile (45) comprend au moins une ouverture traversante (67) décalée angulairement par rapport au logement de réception (38) de l'ergot (37).

11. Réservoir d'aéronef comportant un drain (10) selon l'une quelconque des revendications précédentes.

12. Aéronef comportant un réservoir d'aéronef selon la revendication 11.

## Patentansprüche

1. Ablauf (10) mit:
- einem Körper (11) mit mindestens einer Flüssigkeitseinströmungsöffnung (12, 15) und mindestens einer Flüssigkeitsausströmungsöffnung (13), und
- einem Ventil (30), das so montiert ist, dass es relativ zum Körper (11) translatorisch und rotatorisch beweglich ist, wobei das Ventil (30) mindestens eine Nase (37) aufweist,
- einer Ausrückvorrichtung (43) mit:
- einer feste Führung (44), die so montiert werden kann, dass sie relativ zum Körper (11) unbeweglich ist,
**dadurch gekennzeichnet, dass** die Ausrückvorrichtung (43) ferner umfasst:
- eine bewegliche Führung (45) mit mindestens einem Aufnahmegehäuse (38) für die Nase (37),
- wobei die feste Führung (44) mindestens einen Vorsprung (48) und die bewegliche Führung (45) mindestens eine Aussparung (49) oder alternativ die bewegliche Führung (45) mindestens einen Vorsprung (48) und die feste Führung (44) mindestens eine Aussparung (49) aufweist, wobei die Aussparung (48) eine komplementäre Form zum Vorsprung (48) aufweist, und
- eine Druckfeder (50), die geeignet ist, die bewegliche Führung (45) gegen die feste Führung (44) zu drücken, sodass der Vorsprung (48) mit der Aussparung (49) zusammenwirkt.
so dass die Druckfeder (50) zusammengedrückt werden kann, um die Drehung der beweglichen Führung (45) relativ zur festen Führung (44) zu ermöglichen, wenn ein Überdrehmoment auf das Ventil (30) ausgeübt wird, während sich die Nase (37) noch im Aufnahmegehäuse (38) befindet.

2. Ablauf (10) nach Anspruch 1, **dadurch gekennzeichnet, dass** eine Rückstellfeder (40) zwischen einer Schulter (35) des Ventils (30) und der beweglichen Führung (45) angeordnet ist.

3. Ablauf (10) nach einem der vorhergehenden Ansprüche, **dadurch gekennzeichnet, dass** die feste Führung (44) einen ringförmigen Abschnitt (54) aufweist und dass die Aussparung (49) an einem Ende des ringförmigen Abschnitts (54) der festen Führung (44) ausgebildet ist.

4. Ablauf (10) nach einem der vorhergehenden Ansprüche, **dadurch gekennzeichnet, dass** die feste Führung (44) mindestens einen vorstehenden Abschnitt (55) aufweist, der mit einer Nut (56) entsprechender Form im Körper (11) zusammenwirkt.

5. Ablauf (10) nach Anspruch 3 oder 4, **dadurch gekennzeichnet, dass** eine Außenfläche des ringförmigen Abschnitts (54) der festen Führung (44) und eine Innenfläche des Körpers (11) jeweils eine erste Nut (59) und eine zweite Nut (60), die einander gegenüberliegen, aufweisen.

6. Ablauf (10) nach Anspruch 5, **dadurch gekennzeichnet, dass** ein Federring (58) mit der ersten Nut (59) und der zweiten Nut (60) zusammenwirkt.

7. Ablauf (10) nach einem der vorhergehenden Ansprüche, **dadurch gekennzeichnet, dass** die bewegliche Führung (45) einen zylindrischen Abschnitt (62) umfasst, der in einen Hohlraum in der festen Führung (44) eingesetzt ist und das Aufnahmegehäuse (38) der Nase (37) umfasst.

8. Ablauf (10) nach Anspruch 6, **dadurch gekennzeichnet, dass** die bewegliche Führung (45) eine ringförmige Schulter (63) aufweist, die sich radial von einer Außenfläche des zylindrischen Abschnitts (62) erstreckt.

9. Ablauf (10) nach Anspruch 7, **dadurch gekennzeichnet, dass** der Vorsprung (48) auf einer Oberseite (64) der ringförmigen Schulter (63) der beweglichen Führung (45) ausgebildet ist.

10. Ablauf (10) nach einem der Ansprüche 7 bis 9, **dadurch gekennzeichnet, dass** der zylindrische Abschnitt (62) der beweglichen Führung (45) mindestens eine Durchgangsöffnung (67) aufweist, die gegenüber dem Aufnahmegehäuse (38) für die Nase (37) winklig versetzt ist.

11. Flugzeugtank mit einem Ablauf (10) nach einem der vorhergehenden Ansprüche.

12. Flugzeug mit einem Tank nach Anspruch 11.

## Claims

1. A drain (10) comprising:
- a body (11) having at least one fluid inlet opening (12, 15) and at least one fluid outlet opening (13), and
- a valve (30) mounted so as to be movable in translation and rotation relative to the body (11), the valve (30) comprising at least one toe (37),
- a disengagement device (43) comprising:
- a fixed guide (44), suitable for being mounted so as to be fixed relative to the body (11),
**characterized in that** the disengagement device (43) further comprises:
- a movable guide (45), comprising at least one receiving housing (38) for the toe (37),
- the fixed guide (44) including at least one projection (48) and the movable guide (45) including at least one recess (49), or alternatively the movable guide (45) including at least one projection (48) and the fixed guide (44) including at least one recess (49), the recess (48) having a complementary shape relative to the projection (48), and
- a pressure spring (50), suitable for urging the movable guide (45) against the fixed guide (44) so that the projection (48) cooperates with the recess (49),
so that the pressure spring (50) can be compressed in order to enable the movable guide (45) to rotate relative to the fixed guide (44), when an overtorque is applied to the valve (30) while the toe (37) is still inside the receiving housing (38).

2. The drain (10) according to Claim 1, **characterized in that** a return spring (40) is arranged between a shoulder (35) of the valve (30) and the movable guide (45).

3. The drain (10) according to any one of the preceding claims, **characterized in that** the fixed guide (44) comprises an annular portion (54) and **in that** the recess (49) is made in one end of the annular portion (54) of the fixed guide (44).

4. The drain (10) according to any one of the preceding claims, **characterized in that** the fixed guide (44) comprises at least one projecting portion (55) for cooperating with a groove (56) of corresponding shape in the body (11).

5. The drain (10) according to Claim 3 or 4, **characterized in that** an external face of the annular portion (54) of the fixed guide (44) and an internal face of the body (11) respectively comprise a first groove (59) and a second groove (60) opposite each other.

6. The drain (10) according to Claim 5, **characterized in that** a spring ring (58) cooperates with the first groove (59) and the second groove (60).

7. The drain (10) according to any one of the preceding claims, **characterized in that** the movable guide (45) comprises a cylindrical portion (62) inserted into a hollow internal space in the fixed guide (44) and comprising the receiving housing (38) of the toe (37).

8. The drain (10) according to Claim 6, **characterized in that** the movable guide (45) comprises an annular shoulder (63) extending radially from an external face of the cylindrical portion (62).

9. The drain (10) according to Claim 7, **characterized in that** the projection (48) is made on an upper face (64) of the annular shoulder (63) of the movable guide (45).

10. The drain (10) according to any one of the claims 7 to 9, **characterized in that** the cylindrical portion (62) of the movable guide (45) comprises at least one through opening (67) angularly offset with respect to the receiving housing (38) for the toe (37).

11. An aircraft tank comprising a drain (10) according to any one of the preceding claims.

12. An aircraft comprising an aircraft tank according to Claim 11.
